# EUROPÄISCHE PATENTSCHRIFT

(11) **EP 1 389 425 B1**
(45) Veröffentlichungstag und Bekanntmachung des Hinweises auf die Patenterteilung: **21.09.2011**
(21) Anmeldenummer: 03016750.6
(22) Anmeldetag: 23.07.2003
(51) Int. Cl.: A21B 3/04

(54) **Backofen sowie Verfahren zum Beschwaden mindestens eines ausgewählten Backraums eines Backofens**
Baking oven and process for applying a steam treatment in at least one selected baking oven chamber
Four de cuisson ainsi que procédé de traitement à la vapeur d'au moins une chambre sélectionnée du four

(30) Priorität: 13.08.2002 DE 10237652
(43) Veröffentlichungstag der Anmeldung: 18.02.2004
(73) Patentinhaber: Werner & Pfleiderer Lebensmitteltechnik GmbH, 91550 Dinkelsbühl (DE)
(72) Erfinder: Dannenhauer, Bernd, 91550 Dinkelsbühl (DE)
(74) Vertreter: Rau, Manfred

(56) Entgegenhaltungen:
- EP-A- 0 954 971
- DE-A1- 10 021 248
- DE-A1- 19 516 514
- FR-A1- 2 590 120

## Beschreibung

Die Erfindung betrifft einen Backofen mit einer Mehrzahl von etagenweise angeordneten Herden mit Backräumen, die über eine Beschwadungseinrichtung beschwadet werden können. Ferner betrifft die Erfindung ein Verfahren zum Beschwaden mindestens eines ausgewählten Backraums eines derartigen Backofens.

Derartige Backöfen und derartige Beschwadungsverfahren sind durch offenkundige Vorbenutzung bekannt. Hierbei existieren mehrere unterschiedliche Konstruktionen. Bei einigen bekannten Backöfen ist pro Herd eine eigene Beschwadungseinrichtung eingebaut. Gerade bei einer Mehrzahl von Herden führt dies schnell zu einer sehr aufwendigen und platzraubenden Konstruktion. Bei anderen bekannten Backöfen ist eine Beschwadungseinrichtung vorgesehen, die gleichzeitig zwei Herde beschwadet. Hierbei steht die verfügbare Schwadenmenge der Beschwadungseinrichtung nicht komplett für jeden Herd zur Verfügung. Beide Herde müssen entweder sehr kurz nacheinander belegt werden oder es gelangt beim Belegen des zweiten Herdes Dampf in den Backraum des ersten Herdes. Bei einer Weiterentwicklung dieses bekannten Backofens ist in jeder Schwadenleitung ein Ventil eingebaut, so dass beide Herde mit Hilfe der gleichen Beschwadungseinrichtung einzeln bedampft werden können. In diesem Falle sind die verfügbaren Schwadenmengen jedoch gering. Nach dem Beschwaden des ersten Herdes stehen für den zweiten Herd nur noch geringe Dampfmengen zur Verfügung. Wird, was ebenfalls bei bekannten Etagenbacköfen versucht wird, die Beschwadungseinrichtung direkt in den jeweiligen Herd eingebaut und nicht von diesem beabstandet, resultieren geringe verfügbare Dampfinengen, was sich ebenfalls nachteilig auf den Backvorgang auswirkt. Schließlich sind noch Backöfen bekannt, bei denen die Schwadenerzeugung in einem vom Etagenbackofen getrennten Dampfkessel erfolgt. Dies ist schon aus Platzgründen nicht akzeptabel.

Ein Backofen mit den Merkmalen des Oberbegriffs des Anspruchs 1 ist bekannt aus der EP 0 954 971 A2.

Die DE 195 16 514 A1 beschreibt einen Etagenofen mit einem Verdampfer, der über eine Dampfzufuhreinrichtung mit Backherden des Ofens verbunden ist.

Es ist eine Aufgabe der vorliegenden Erfindung, einen Backofen der eingangs genannten Art derart weiterzubilden, dass auch eine Mehrzahl von Backräumen mit einer relativ platzsparenden Beschwadungseinrichtung bedarfsgerecht versorgt werden kann.

Diese Aufgabe ist erfindungsgemäß gelöst durch einen Backofen mit den im Anspruch 1 angegebenen Merkmalen.

Die Erfindung löst sich von dem Konzept einer festen Zuordnung von Schwadenerzeugungsmodulen zu den einzelnen Backräumen, wie sie bei den bekannten Backöfen vorliegt. Über das Schwaden-Leitungssystem lässt sich jeder Backraum mit jedem Schwadenerzeugungsmodul verbinden. Dies ermöglicht es, gesteuert vorgebbar die Schwaden dort zu erzeugen, wo dies je nach den Betriebsparametern der Beschwadungseinrichtung am effizientesten ist und die erzeugten Schwaden dann dem zu beschwadenden Backraum zuzuführen. Gleichzeitig kann aufgrund der flexiblen Zuordnung der Schwadenerzeugungsmodule zu den Backräumen eine Beschwadungseinrichtung realisiert werden, die wesentlich weniger Schwadenerzeugungsmodule aufweist, als Backräume vorhanden sind. Es resultiert eine vergleichsweise kompakte Beschwadungseinrichtung. Je nach den Anforderungen, die der Backofen an die Beschwadung stellt, kann die Anzahl der Schwadenerzeugungsmodule geringer sein als die Anzahl der Herde, größer sein als diese, oder es kann die gleiche Anzahl von Schwadenerzeugungsmodulen einerseits und Herden andererseits vorgesehen sein. In allen diesen Fällen liegt erfindungsgemäß keine feste Zuordnung der Schwadenerzeugungsmodule zu den Herden vor.

Ein Schwaden-Leitungssystem gemäß Anspruch 2 kann mit geringem Aufwand realisiert werden.

Beschwadungsventile gemäß Anspruch 3 führen zu einer präzisen Beschwadungssteuerung des Backofens.

Hierbei stellen die Anordnungen gemäß den Ansprüchen 4 und 5 alternative Konfigurationen zur Beschwadungssteuerung dar. Es können die Beschwadungsventile gemäß den Ansprüchen 4 und 5 auch kumulativ vorgesehen sein, was die Präzision der Beschwadungssteuerung nochmals erhöht.

Beschwadungsventile gemäß Anspruch 6 lassen sich preisgünstig herstellen.

Mit Temperatursensoren gemäß Anspruch 7 lässt sich die Beschwadungsleistung der Beschwadungseinrichtung in einfacher Weise vorherbestimmen.

Heizstäbe gemäß Anspruch 8 führen zu Schwadenerzeugungsmodulen mit hoher Wärmekapazität.

Die Heizeinrichtung des Backofens dient in der Regel zur beschwadungsunabhängigen Beheizung der Backräume. Wenn die Heizeinrichtung gemäß Anspruch 9 zudem die Schwadenerzeugungsmodule beheizt, dient sie gleichzeitig zwei Funktionen, was die Kompaktheit des Backofens erhöht: Die Schwadenerzeugungsmodule können alternativ auch elektrisch beheizt sein.

Eine Signalverbindung zwischen der Schwaden-Steuereinrichtung und Wasser-Zuführventilen gemäß Anspruch 10 führt zu einer einfachen Beschwadungssteuerung durch die Schwaden-Steuereinrichtung.

Eine weitere Aufgabe der Erfindung ist es, Beschwadungsstrategien für einen derartigen Backofen anzugeben, die zu einer möglichst effizienten Ausnutzung der Beschwadungseinrichtung führen.

Diese weitere Aufgabe ist erfindungsgemäß gelöst durch die beiden alternativen Verfahren gemäß den Ansprüchen 11 und 12.

Ein Beschwadungsverfahren gemäß Anspruch 11 führt dazu, dass das Beschwaden innerhalb der Beschwadungseinrichtung zu jeder Zeit hocheffizient erfolgt. Wenn das zu einem gegebenen Zeitpunkt heißeste Schwadenerzeugungsmodul während des Beschwadens so weit abgekühlt ist, dass ein anderes Schwadenerzeugungsmodul heißer ist, kann automatisch auf dieses gewechselt werden.

Das Verfahren gemäß Anspruch 12 erhöht die Schwadenerzeugungskapazität bei gegebener Erzeugungsleistung der einzelnen Schwadenerzeugungsmodule. Die Kapazität kann hierbei über die Größe der vorgegebenen Modulgruppen, in welche die Schwadenerzeugungsmodule eingruppiert werden, variiert werden.

Fest vorgegebene Modulgruppen gemäß Anspruch 13 lassen sich baulich einfach realisieren.

Variable Modulgruppen gemäß Anspruch 14 erhöhen die Effizienz der Beschwadungseinrichtung.

Die Identifizierung der heißesten Modulgruppe gemäß den Alternativen nach den Ansprüchen 15 und 16 lässt sich einfach realisieren.

Auch das Beschwadungsverfahren gemäß Anspruch 17 führt zu einer erhöhten Effizienz der Beschwadungseinrichtung.
Ein Ausführungsbeispiel der Erfindung wird nachfolgend anhand der Zeichnungen näher erläutert. In dieser zeigen:
- Fig. 1: eine perspektivische Ansicht eines erfindungsgemäßen Backofens;
- Fig. 2: einen Schnitt durch den Backofen gemäß Linie II-II in Fig. 1;
- Fig. 3: einen Schnitt durch den Backofen gemäß Linie III-III in Fig. 2;
- Fig. 4: einen Schnitt durch einen Ausschnitt des Backofens gemäß Linie IV-IV in Fig. 1;
- Fig. 5: eine mehr Details zeigende Ausschnittsvergrößerung aus Fig. 4.

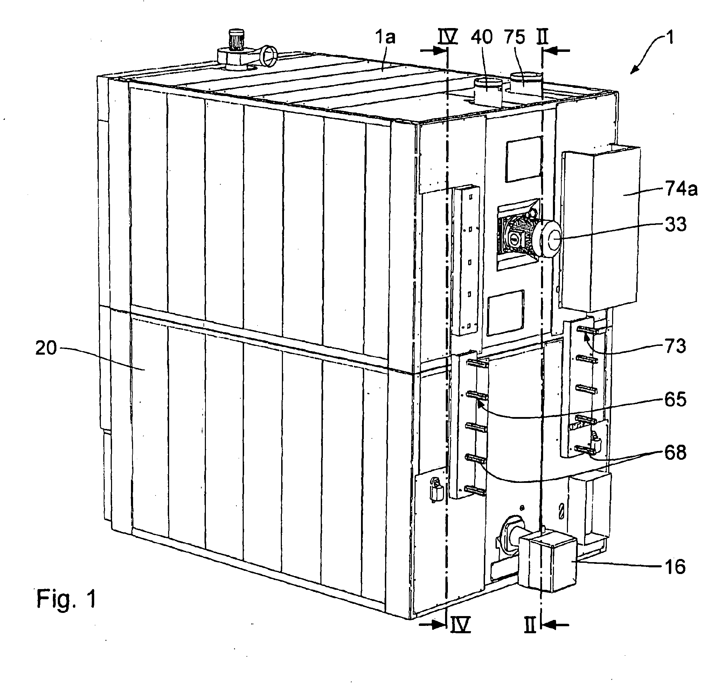

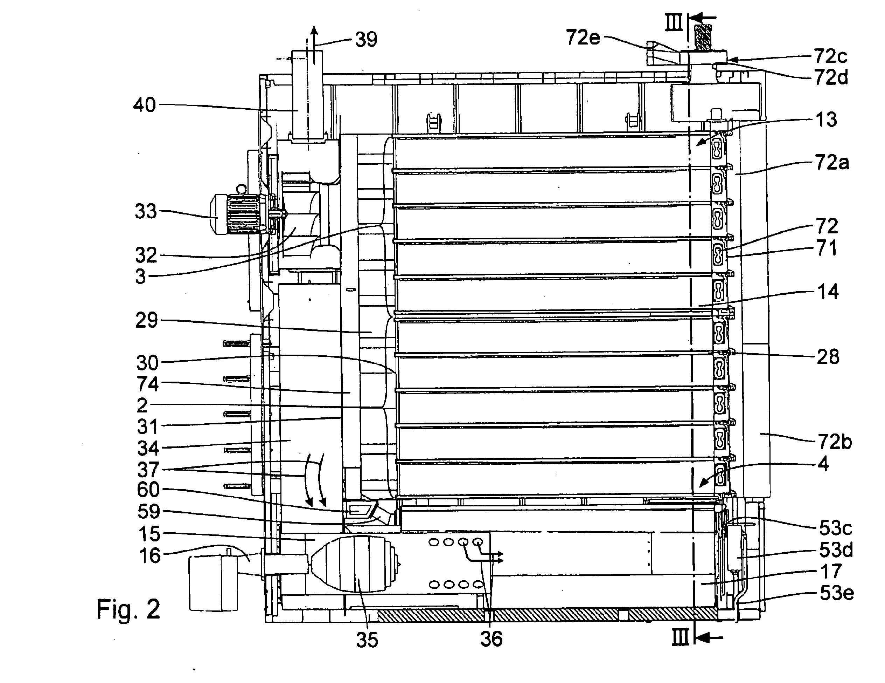

Fig. 1 zeigt eine perspektivische Außenansicht eines insgesamt mit dem Bezugszeichen 1 bezeichneten Etagenbackofens. Fig. 2 zeigt den Etagenbackofen 1 in einem vertikalen Längsschnitt. Der Etagenbackofen 1 hat ein Gehäuse 1a und weist zwei übereinander angeordnete Herdgruppen 2, 3 auf, die ihrerseits jeweils fünf etagenweise übereinander angeordnete Herde 4 bis 8 und 9 bis 13 aufweisen. Die Bezugszeichennummerierung der Herdgruppen 2, 3 sowie der Herde 4 bis 13 erfolgt hierbei jeweils von unten nach oben. Jeder Herd 4 bis 13 weist einen Backraum 14 auf.

Die Backräume 14 werden mit Heizgas beheizt. Zur Erzeugung des Heizgases ist unterhalb des untersten Herdes 4 eine im Wesentlichen zylindrische Brennkammer 15 angeordnet, in die ein Brenner 16 einmündet. Der Brennkammer 15 ist ein Heizgas-Mischraum 17 nachgeordnet.

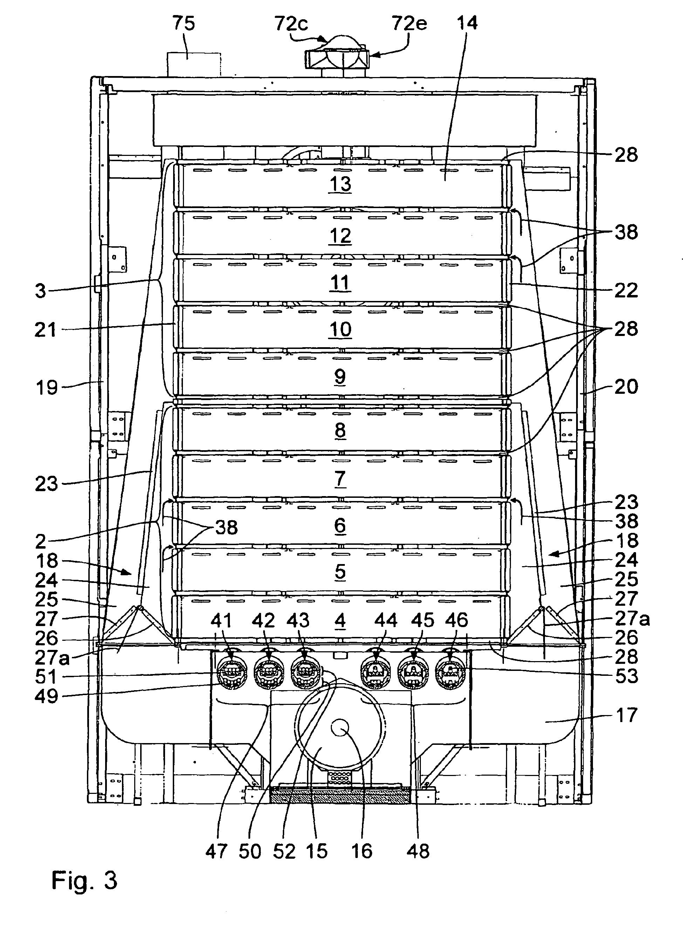

Fig. 3 zeigt, dass der Heizgas-Mischraum 17 beidseitig der Herde 4 bis 13 in das untere Ende eines Heizgas-Zuführkanals 18 einmündet, welcher zwischen Gehäuse-Seitenwänden 19, 20 und diesen benachbarten Backraum-Seitenwänden 21, 22 ausgebildet ist. Durch eine Trennwand 23 ist der Heizgas-Zuführkanal 18 in einen inneren Heizgas-Zuführkanalabschnitt 24 und in einen äußeren Heizgas-Zuführkanalabschnitt 25 unterteilt. Der innere Heizgas-Zuführkanalabschnitt 24 verbindet den Heizgas-Mischraum 17 mit der unteren Herdgruppe 2. Der äußere Heizgas-Zuführkanalabschnitt 25 verbindet den Heizgas-Mischraum 17 mit der oberen Herdgruppe 3. Zwischen dem Heizgas-Mischraum 17 und der unteren Herdgruppe 2 ist im inneren Heizgas-Zuführkanalabschnitt 24 beidseitig jeweils eine innere Heizgas-Dosierklappe 26 und zwischen den Heizgas-Mischraum 17 und der oberen Herdgruppe 3 ist in dem äußeren Heizgas-Zuführkanalabschnitt 25 beidseitig jeweils eine äußere Heizgas-Dosierklappe 27 angeordnet. Alternativ können am jeweiligen Ort der Heizgas-Dosierklappen 26, 27 anstelle dieser Dosierklappen Endanschläge am Gehäuse 1a angebracht sein, die den Schwenkbereich einer Heizgas-Dosierklappe 27a begrenzen, welche in Fig. 3 ebenfalls schematisch dargestellt ist.

Herdseitig mündet der Heizgas-Zuführkanal in Heizgaskanäle 28 ein, die jeweils ober- und unterhalb der einzelnen Backräume 14 angeordnet sind.

Fig. 2 zeigt, dass die Heizgas-Kanäle 28 austrittseitig in einen Heizgas-Sammelraum 29 münden. Dieser ist zwischen einer stirnseitigen Backraum-Seitenwand 30 und einer dieser benachbarten Trennwand 31 im Gehäuse 1a ausgebildet. Der Heizgas-Sammelraum 29 mündet in ein Heizgas-Gebläse 32, welches mittels eines Motors 33 angetrieben wird. Das Heizgas-Gebläse 32 mündet wiederum in einen Heizgas-Rückführkanal 34, dem die Brennkammer 15 nachgeordnet ist.

Das durch die Verbrennung im Brenner 16, die durch eine stilisierte Flamme 35 angedeutet ist, entstehende Heizgas strömt entsprechend den in Fig. 1 gezeigten Strömungsrichtungspfeilen 36 aus der Brennkammer 15 in den Heizgas-Mischraum 17. Dort wird das Heizgas mit entsprechend den. Strömungsrichtungspfeilen 37 zugeführten abgekühlten Heizgasen gemischt, wodurch Heizgas mit einer entsprechenden Mischtemperatur erzeugt wird. Dieses wird entsprechend den Strömungsrichtungspfeilen 38, die in Fig. 3 gezeigt sind, bei geöffneten Dosierklappen 26, 27 durch den Heizgas-Zuführkanal 18 hin zu den Heizgas-Kanälen 28 geführt. Über die Dosierklappen 26, 27 oder alternativ über die Dosierklappen 27a lässt sich dabei die Menge des den Herdgruppen 2, 3 zugeführten Heizgases regulieren. Die den einzelnen Herden 4 bis 13 zugeführte Heizgasmenge kann zudem noch durch den einzelnen Heizgas-Kanälen 28 zugeordnete weitere Dosierklappen erfolgen, die in der Zeichnung nicht dargestellt sind. Durch den Sog des Heizgas-Gebläses 32 wird das Heizgas durch die Heizgas-Kanäle 28 gesaugt und verlässt diese in den Heizgas-Sammelraum 29. Mit Hilfe des Heizgas-Gebläses 32 wird das Heizgas anschließend in den Heizgas-Rückführkanal 34 gedrückt, von wo aus es wieder zur Brennkammer 15 gelangt. In dem Maße, in dem Heizgas vom Brenner 16 dem Mischraum 17 neu zugeführt wird, werden abgekühlte Heizgase entsprechend dem Strömungsrichtungspfeil 39, der in Fig. 2 gezeigt ist, durch einen Kamin 40, der in Leitungsverbindung mit dem Heizgas-Sammelraum 29 steht, abgeführt.

Neben Heizgas werden im Etagenbackofen 1 den Herden 4 bis 13 auch Wasserdampfschwaden zugeführt, die der gesteuerten Befeuchtung des Backguts in den Backräumen 14 mit Wasserdampf einer vorgegebenen Temperatur dienen. Diese Schwaden werden in als Dampfrohre 41 bis 46 ausgebildeten Schwadenerzeugungsmodulen erzeugt. Der Etagenbackofen 1 weist insgesamt sechs Dampfrohre 41 bis 46 auf. Zusammen mit dem Brenner 16 bilden die Dampfrohre 41 bis 46 eine Beschwadungseinrichtung zur Erzeugung von Schwaden. Die Dampfohre 41 bis 46 sind zwischen der Brennkammer 15 und dem Heizgas-Mischraum 17 einerseits und dem untersten Herd 4 andererseits nebeneinander angeordnet, so dass sie vom Heizgas in der Brennkammer 15 und dem Heizgas-Mischraum 17 beheizt werden. Die Dampfrohre 41 bis 47 sind im Wesentlichen identisch aufgebaut, so dass nachfolgend stellvertretend der Aufbau des Dampfrohrs 46 beschrieben ist, sofern nicht explizit anders angesprochen. Die Bezugszeichennummerierung der Dampfrohre 41 bis 46 erfolgt in der Darstellung der Fig. 3 aufsteigend von links nach rechts.

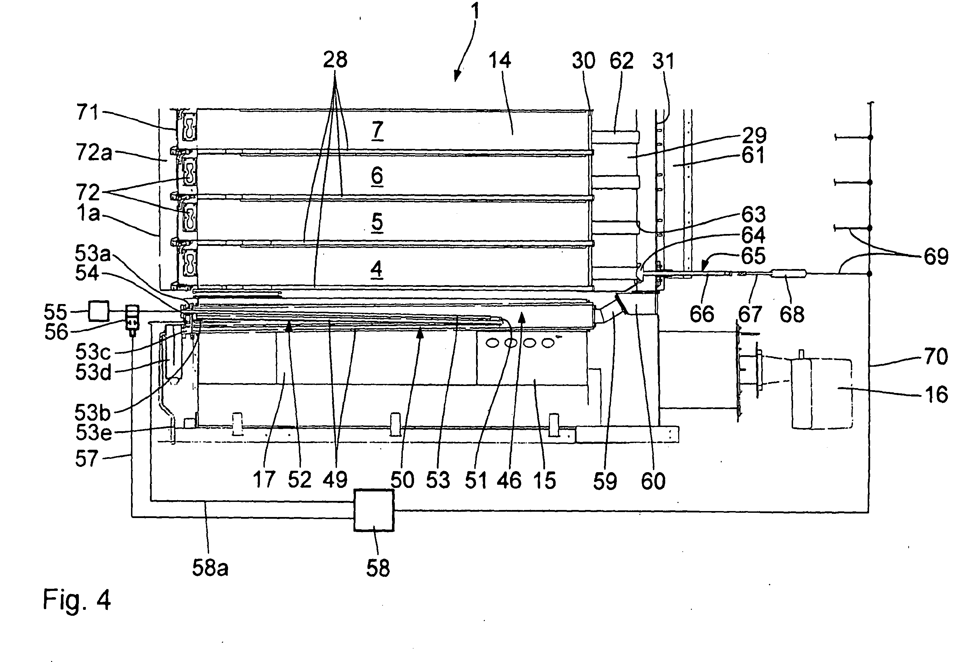

Fig. 3, in der die Dampfrohre 41 bis 46 im Querschnitt dargestellt sind, zeigt, dass die insgesamt sechs Dampfrohre 41 bis 46 räumlich in zwei Modulgruppen 47, 48 gruppiert sind. Fig. 3 und 4 zeigen den Aufbau der Dampfrohre 41 bis 46 im Detail. Jedes der Dampfrohre 41 bis 46 weist eine Mehrzahl von als Wärmespeicher dienenden massiven Metallstangen 49 auf, die der Länge nach in die Dampfrohren 41 bis 46 eingelegt sind. Fünf Metallstangen 49 liegen hierbei als erste Metallstangengruppe 50 direkt auf einem tiefliegenden Abschnitt der Innenwand der Dampfrohre 41 bis 46 an. Mittig in den Dampfrohren 41 bis 46 ist eine U-förmige Profilschiene 51 angeordnet. Diese Profilschiene, die sich nach oben hin öffnet, trägt in jedem der Dampfrohre 41 bis 46 vier weitere Metallstangen 49, die zu einer zweiten Metallstangengruppe 52 gehören. Fig. 4 zeigt am Beispiel des Dampfrohrs 46, dass die Längsachse der Profilschiene 51 zur Längsachse der Dampfrohre 41 bis 46 geneigt ist, so dass die Profilschiene 51 an ihrem der Brennkammer 15 zugewandten Ende tiefer liegt als an ihrem gegenüberliegenden Ende.

Oberhalb der Profilschiene 51 mit der zweiten Metallstangengruppe 52 ist ein sich parallel zur Längsachse der Profilschiene 51 erstreckendes Spritzrohr 53 vorgesehen. Dieses ist mit einem Ende durch eine Bohrung in der vom Brenner 16 abgewandten Stirnwand 53a des Dampfrohrs 46 geführt und dort mittels eines Dichtrings festgelegt.

Durch die Stirnwand 53a ebenfalls hindurchgeführt ist ein Temperatursensor 53b. Die Messspitze des Temperatursensors 53b ist in einem Zwischenraum zwischen den beiden Metallstangengruppen 50, 52 des Dampfrohrs 56 angeordnet. Jedes Dampfrohr 41 bis 46 weist einen eigenen Temperatursensors 53b auf.

In der Stirnwand 53a ist bodenseitig eine Wasser-Ablauföffnung 53c ausgebildet. Diese mündet in einen Siphon 53d, der ablaufseitig mit einer Wasser-Ablaufleitung 53e verbunden ist.

Am durch die Stirnwand 53a geführten Ende des Spritzrohrs 53 ist ein Anschlussgewinde für eine in Fig. 4 schematisch dargestellte Wasserzuführ-Leitung 54 vorgesehen. Diese verbindet das Spritzrohr 53 mit einem als Wasserquelle dienenden Vorratsbehälter 55. Die Wasserzuführ-Leitung 54 weist einen in der Zeichnung nicht dargestellten Verzweigungspunkt auf, in dem sie sich in den einzelnen Dampfrohren 41 bis 46 zugeordnete Wasserzuführ-Leitungsabschnitte verzweigt. Zwischen diesem Verzweigungspunkt und jedem Spritzrohr 53 ist jeweils ein Magnetventil 56 in dem entsprechenden Wasserzuführ-Leitungsabschnitt der Wasserzuführ-Leitung 54 angeordnet. Über eine Steuerleitung 57 ist jedes Magnetventil 56 mit einer zentralen Schwaden-Steuereinrichtung 58 verbunden. Diese kann, anders als dies in Fig. 4 dargestellt ist, im Gehäuse 1a untergebracht sein. Mit Hilfe der Schwaden-Steuereinrichtung 58 erfolgt eine Vorgabe der Zuordnung der Dampfrohre 41 bis 46 zu den Herden 4 bis 13, wie nachfolgend noch erläutert wird. Über Datenleitungen 58a steht die Schwaden-Steuereinrichtung 58 jeweils mit einem Temperatursensor 53b in Verbindung.

Am von der Wasserzuführ-Leitung 54 abgewandten freien Ende weist das Spritzrohr 53 eine Austrittsöffnung auf. Zudem weist das Spritzrohr 53 längs seiner Erstreckung eine Mehrzahl weiterer Austrittsöffnungen auf. Der Stirnwand 53a des Dampfrohres 46, in welcher die Durchtrittsbohrung für das Spritzrohr 53 angeordnet ist, gegenüberliegend mündet das Dampfrohr 46 in einen Auslassstutzen 59 ein. Jedem Dampfrohr 41 bis 46 ist ein Auslassstutzen 59 zugeordnet. Die Auslassstutzen 59 münden in einen gemeinsamen Schwaden-Sammelraum 60 ein.

Der Schwaden-Sammelraum 50 mündet in einen Beschwadungs-Hauptkanal 61, der parallel und benachbart zum Heizgas-Sammelraum 29 verläuft. Der Beschwadungs-Hauptkanal 61 liegt an der Trennwand 31 des Gehäuses 1a an. Vom Beschwadungs-Hauptkanal 61 zweigen Beschwadungs-Stichleitungen 62 ab, die den Beschwadungs-Hauptkanal 61 mit jedem Backraum 14 verbinden. Den runden Abzweigöffnungen 63, über die die Beschwadungs-Stichleitungen 62 vom Beschwadungs-Hauptkanal 61 abzweigen, sind jeweils kegelstumpfförmige Ventilkörper 64 eines als Schieber ausgeführten Beschwadungsventils 65 zugeordnet. In Fig. 4 ist nur ein Beschwadungsventil 65 dargestellt, es ist aber jeder Beschwadungs-Leitung 62 und damit jedem Backraum 14 ein gleichartig aufgebautes Beschwadungsventil 65 zugeordnet. Eine Schieberstange 66, an derem einen Ende der Ventilkörper 64 angebracht ist, ist durch eine entsprechende Öffnung in der Trennwand 31 hindurchgeführt. Das dem Ventilkörper 64 gegenüberliegende Ende der Schieberstange 66 ist mit einer Hubstange 67 eines Hubzylinders 68 verbunden.

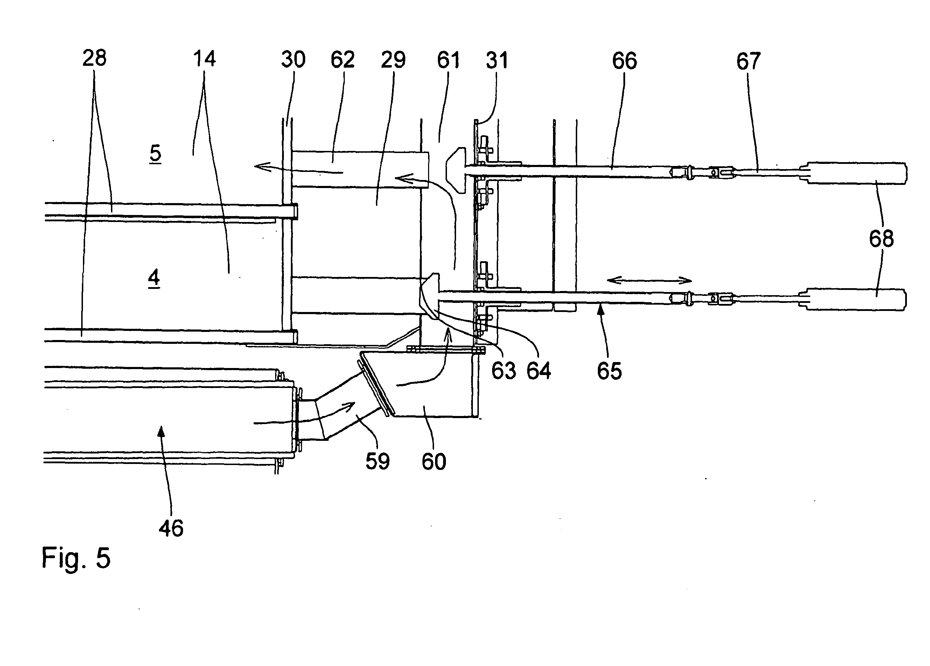

Fig. 5 zeigt in einer detailreicheren Ausschnittsvergrößerung von Fig. 4 zwei Betriebsstellungen des Beschwadungsventils 65 am Beispiel der Beschwadungsventile 65 für die Backräume 14 der Herde 4 und 5. Das Beschwadungsventil 65 für den Backraum 14 des Herdes 4 ist geschlossen. Hierbei liegt eine Dichtfläche des Ventilkörpers 64 am Umfangskantenbereich der zugehörigen Abzweigöffnungen 63 dichtend an. Das Beschwadungsventil 65 für den Backraum 14 des Herdes 5 ist geöffnet, das heißt die Schieberstange 66 des Beschwadungsventils 66 ist mittels des Hubzylinders 68 durch die Öffnung in der Trennwand 31 zurückgezogen, so dass der Ventilkörper 64 sich von der Abzweigöffnung 63 abhebt. In dieser Stellung ist ein Schwadendurchgang vom Beschwadungs-Hauptkanal 61 in den Backraum 14 des Herdes 5 durch die Beschwadungs-Stichleitung 62 möglich.

Über Steuerleitungen 69 stehen die Hubzylinder 68 der Beschwadungsventile 65 für die Herde 4 bis 13 mit einer Haupt-Ventilsteuerleitung 70 in Verbindung. Diese steht wiederum mit der Schwaden-Steuereinrichtung 58 in Verbindung.

Nahe einer Backraum-Stirnwand 71, die der Backraum-Stimwand 30 gegenüberliegt, ist zu beiden Seiten jedes Backraums 14 jeweils eine Dampfentlastungsklappe 72 in der Backraumwand angeordnet, die dann öffnet, wenn im zugehörigen Backraum 14 ein vorgegebener Überdruck herrscht.

Wie Fig. 4 im Zusammenhang mit Fig. 1 zu entnehmen ist, sind die Beschwadungsventile 65, die dem Beschwadungs-Hauptkanal 61 zugeordnet sind, gegenüber einer die Brennerlängsachse enthaltenden vertikalen Mittelebene des Etagenbackofens 1 zu einer Seite hin, in Fig. 1 nach links, versetzt. In Bezug auf diese Mittelebene spiegelbildlich sind Entschwadungsventile 73 sowie ein Entschwadungs-Hauptkanal 74 in gleicher Weise angeordnet wie die Beschwadungsventile 65 und der Beschwadungs-Hauptkanal 61. In Fig. 1 sind Abdeckhauben für die Beschwadungsventile 65 und die Entschwadungsventile 73 der Herdgruppe 2 sowie für die Beschwadungsventile der Herdgruppe 3 weggelassen. Darüber hinaus sind in der Fig. 1 auch die Beschwadungsventile für die Herdgruppe 3 weggelassen. Nur im Bereich der Entschwadungsventile der Herdgruppe 3 ist eine Abdeckhaube 76 sichtbar. Der Entschwadungs-Hauptkanal 74 ist in Fig. 2 dargestellt. Der Entschwadungs-Hauptkanal 74 steht mit einem Entschwadungsstutzen 75 in Verbindung, der z.B. in Fig. 1 dargestellt ist und aus der oberen Wand des Gehäuses 1a ragt. Die Dampfrohre 41 bis 46, die diesen zugeordneten Auslassstutzen 59, der Schwadensammelraum 60, der Beschwadungs-Hauptkanal 61 mit den Beschwadungsstichleitungen 62, die Dampfentlastungsklappen 72, die Schwadenabsaugkanäle 72a, 72c, der Auslasstrichter 72 e, der Entschwadungshauptkanal 74 mit den zugehörigen Entschwadungs Stichleitungen sowie der Entschwadungsstutzen 75 sind Teile eines Schwaden-Leitungssystems.

Prinzipiell ist es auch möglich, über die Entschwadungsventile 73 bei geöffneten Beschwadungsventilen 65 eine Beschwadung der Backräume 14 zu steuern. In dieser Hinsicht können auch die Entschwadungsventile 73 als Beschwadungsventile angesehen werden.

Die Dampfentlastungsklappen 72 stellen in geöffnetem Zustand eine Verbindung zwischen den Backräumen 14 und einem Schwaden-Absaugkanal 72a her, der zwischen der Backraum-Stirnwand 71 und einer dieser benachbarten Seitenwand 72b des Gehäuses 1a ausgebildet ist. Der Schwadenabsaugkanal 72a ist mit einem Schwadenabsaugventilator 72c verbunden. Ein Schwadenabsaugkanal 72d des Schwadenabsaugventilators 72c ist durch die obere Wand des Gehäuses 1a hindurchgeführt und endet in einem Auslasstrichter 72e.

Der Weg der Schwaden durch den Etagenbackofen 1 wird nachfolgend anhand des Beispiels des Dampfrohrs 46 und des nachfolgenden Schwaden-Leitungssystems beschrieben:

Durch von der Schwaden-Steuereinrichtung 58 gesteuertes Öffnen des Magnetventils 56 gelangt Wasser von dem Vorratsbehälter 55 durch die Wasserzuführ-Leitung 54 in das Spritzrohr 53 des Dampfrohrs 46. Das Wasser verlässt das Spritzrohr 53 durch die hierin ausgebildeten Austrittsöffnungen und trifft auf die vorgeheizten Metallstangen 49 der Metallstangengruppen 50, 52. Hierbei wird das Wasser verdampft, wodurch sich im Dampfrohr 46 Schwaden bilden. Überflüssiges oder auskondensierendes Wasser gelangt durch die Wasser-Ablauföffnung 53c, den Siphon 53d und die Wasser-Ablaufleitung 53e nach draußen. Die im Dampfrohr 46 erzeugten Schwaden gelangen durch den Auslassstutzen 59 in den Schwaden-Sammelraum 60 und von dort in den Beschwadungs-Hauptkanal 61. Je nachdem, welche Beschwadungsventile 65 geöffnet sind, gelangen die Schwaden in die zu den geöffneten Beschwadungsventilen 65 gehörenden Backräume 14 durch die entsprechenden Beschwadungs-Stichleitungen 62. Von dort nach draußen gelangen die Schwaden entweder über die Dampfentlastungsklappen 72, den Schwadenabsaugkanal 72a, den Schwadenabsaugkanal 72d und den Auslasstrichter 72e, was im Rahmen eines gesteuerten Schwadenabsaugvorgangs geschehen kann. Alternativ kann über den Schwadenabsaugventilator 72c auch ein gesteuerter Luftaustausch des Innern des Gehäuses 1a durchgeführt werden. Andererseits gelangen die Schwaden über den Entschwadungs-Hauptkanal 74 mit zugehörigen Entschwadungs-Stichleitungen durch den Entschwadungsstutzen 75 nach draußen. Diese zweite Entschwadung geschieht im Rahmen eines über die Betätigung der Entschwadungsventile 73 gesteuerten Entschwadungsvorgangs.

Je nach den Anforderungen des Backguts in den Backräumen 14 werden alle oder einzelne Backräume 14 im Zuge des Backvorgangs mit Schwaden vorgegebener Menge und Temperatur beschwadet. Mit dem Etagenbackofen 1 ist das Beschwaden ausgewählter Backräume 14 nach mehreren Strategien möglich. Vor diesen Beschreibungsstrategien sind alle Magnetventile 56 geschlossen. Die Strategien werden nachfolgend beschrieben:

Nach einer ersten Beschwadungsstrategie wird zunächst die Temperatur in den Dampfrohren 41 bis 46 mit Hilfe der Temperatursensoren 53b gemessen und über die Datenleitungen 58a an die Schwaden-Steuereinrichtung 58 übermittelt. Mit Hilfe eines internen Mikroprozessors identifiziert die Schwaden-Steuereinrichtung 58 das heißeste Dampfrohr, zum Beispiel das Dampfrohr 41. Anschließend wird mit der Schwaden-Steuereinrichtung 58 über die Steuerleitung 57 das dem Dampfrohr 41 zugeordnete Magnetventil 56 geöffnet, so dass Wasser in das Dampfrohr 41 einströmen kann und Schwaden gebildet werden.

Die Beschwadungsventile 65 werden über die Haupt-Ventilsteuerleitung 70 und die Steuerleitungen 69 durch die Schwaden-Steuereinrichtung 58 derart angesteuert, dass eine Leitungsverbindung zwischen dem Dampfrohr 41 und den zur Beschwadung ausgewählten Backräumen 14 geschaffen ist. Beim Beschwaden können zur Ermöglichung eines Schwadendurchsatzes durch die ausgewählten Backräume 14 die Entschwadungsventile 73 zunächst geöffnet sein und später, wenn ausreichend Schwaden in den ausgewählten Backräumen 14 vorliegen, geschlossen werden. Die Öffnungsund Schließvorgänge der Entschwadungsventile 73 werden ebenfalls von der Schwaden-Steuereinrichtung 58 über entsprechende Ventilsteuerleitungen, die in der Zeichnung nicht dargestellt sind, gesteuert. Die Dampfentlastungsklappen 72 gewährleisten, dass in den Backräumen 14 kein unerwünschter Überdruck entsteht. Zum Beenden des Beschwadens werden die Entschwadungsventile 73 geöffnet, so dass die Schwaden aus den ausgewählten Backräumen 14 durch den Entschwadungs-Hauptkanal 74 und den Entschwadungsstutzen 75 abziehen können.

Nachfolgend werden weitere Beschwadungsstrategien des Etagenbackofens 1 beschrieben. Hierbei erfolgt eine Erläuterung nur dort, wo sich Änderungen im Vergleich zur vorstehend beschriebenen ersten Beschwadungsstrategie ergeben.

Bei einer zweiten Beschwadungsstrategie wird zunächst durch Abruf eines entsprechenden Speicherwertes aus einem Speicher der Schwaden-Steuereinrichtung 58 oder durch eine entsprechende Eingabe eine Anzahl von Dampfrohren 41 vorgegeben, die zu einer Modulgruppe gehören sollen. Bei einer Gruppierung die der räumlichen Gruppierung gemäß Fig. 3 folgt, liegen zwei Modulgruppen 47, 48 mit jeweils drei Dampfrohren 41 bis 43 und 44 bis 46 vor. In diesem Fall gehören also drei Dampfrohre zu einer Modulgruppe. Nach dem Messen der Temperaturen in den einzelnen Dampfrohren 41 bis 46 mit den Temperatursensoren 53b wird diejenige Modulgruppe, welche die heißesten Dampfrohre 41 bis 46 enthält, von der Schwaden-Steuereinrichtung 56 identifiziert. Die Modulgruppeneinteilung kann hierbei fest vorgegeben sein, das heißt, es wird in diesem Fall mit Hilfe der Schwaden-Steuereinrichtung 58 entschieden, welche der beiden fest vorgegebenen Modulgruppen 47, 48 die heißeren Dampfrohre 41 bis 46 enthält. Im einfachsten Fall werden die Temperaturen der Dampfrohre 41 bis 46 in den Modulgruppen 47, 48 einfach addiert, wobei diejenige Modulgruppe, bei der sich nach einer derartigen Addition der größere Wert ergibt, die identifizierte heißeste Modulgruppe dargestellt. Natürlich sind auch andere Algorithmen zur Identifikation einer heißesten fest vorgegebenen Modulgruppe möglich. Die heißeste Modulgruppe kann bei der festen Modulgruppeneinteilung alternativ zum Beispiel über eine Berechnung der Durchschnittstemperatur der gemessenen Temperaturen der einzelnen Dampfrohre 41 bis 46 innerhalb der einzelnen Modulgruppen 47, 48 erfolgen.

Im anderen Fall ist die Modulgruppeneinteilung variabel, das heißt, es ist nur die Anzahl der Dampfrohre 41 bis 46 vorgegeben, die zu einer Modulgruppe gehören sollen, im vorliegenden Fall also drei Dampfrohre, nicht jedoch die Zuordnung einzelner Dampfrohre 41 bis 46 zu einer bestimmten Modulgruppe 47, 48. Im Fall der variablen Modulgruppeneinteilung identifiziert die Schwaden-Steuereinrichtung 58 nach dem vorliegenden Beispiel der Modulgruppeneinteilung in Dreiergruppen einfach die drei heißesten Dampfrohre und definiert diese als Modulgruppe. Vorliegend könnten zum

Beispiel die Dampfrohre 41, 42 und 45 am heißesten sein. Diese würden dann von der Schwaden-Steuereinrichtung 58 als Modulgruppe zur Schwadenbildung identifiziert werden.

Nach dem Identifizieren der die definitionsgemäß heißesten Dampfrohre enthaltenden Modulgruppe erfolgt bei der zweiten Beschwadungsstrategie unabhängig davon, ob die Modulgruppeneinteilung fest vorgegeben ist oder variabel ist, eine Ansteuerung der Magnetventile 56 und der Beschwadungsventile 65, 73 im Sinne des bei der Diskussion der ersten Beschwadungsstrategie Ausgeführten derart, dass über das Schwaden-Leitungssystem eine Verbindung zwischen der so identifizierten heißesten Modulgruppe und den ausgewählten Backräumen 14 geschaffen ist.

Bei den beiden vorstehend genannten Beschwadungsstrategien kann es abhängig von den gemessenen Temperaturdaten der Dampfrohre 41 bis 46 oder abhängig von einer vorgegebenen Wärmemenge, die im Rahmen des Beschwadungsvorgangs den Backräumen 14 zuzuführen ist, vorkommen, dass die Beschwadung durch das heißeste Dampfrohr gemäß der ersten Beschwadungsstrategie oder durch die heißeste Modulgruppe gemäß der zweiten Beschwadungsstrategie nicht ausreicht. In diesem Fall ermittelt die Schwaden-Steuereinrichtung 58 analog zur Ermittlung des heißesten Dampfrohres bzw. der heißesten Modulgruppe das der heißesten Temperatur am nächsten kommende, also nächstheiße, Dampfrohr bzw. die nächstheiße Modulgruppe. Dieses nächstheiße Dampfrohr oder die nächstheiße Modulgruppe werden dann für die Beschwadung zugeschaltet.

## Patentansprüche

1. Backofen (1)
- mit einem Gehäuse (1a),
- mit einer Mehrzahl etagenweise übereinander angeordneter Herde (4 bis 13) mit jeweils mindestens einem Backraum (14),
- mit einer Heizeinrichtung (16) zum Beheizen der Backräume (14),
- mit einer zu jedem Herd (4 bis 13) führenden Beschwadungseinrichtung (16, 41 bis 46, 59 bis 68) zum Zuführen von Schwaden und/oder Frischluft zu den Backräumen (14),
-- mit mindestens zwei mit einer Wasserquelle (55) über jeweils ein steuerbares Zuführ-Ventil (56) verbundenen Schwadenerzeugungsmodulen (41 bis 46) zum Erzeugen der Schwaden,
- mit einer von jedem Herd (4 bis 13) wegführenden Entschwadungseinrichtung (72 bis 75) zum Abführen von Schwaden und/oder Abluft von den Backräumen (14),
- mit einem Schwaden-Leitungssystem (59 bis 62, 72a, 72d, 72e, 74, 75), welches die Schwadenerzeugungsmodule (41 bis 46) mit den Backräumen (14) und die Backräume (14) mit der Umgebung des Gehäuses (1a) verbindet,
**gekennzeichnet durch**
- eine Ausführung des Schwaden-Leitungssystems (59 bis 62, 72a, 72d, 72e, 74, 75) derart, dass
-- sich jeder Backraum (14) mit jedem Schwadenerzeugungsmodul (41 bis 46) verbinden lässt,
-- die Schwadenerzeugungsmodule (41 bis 46) den Herden (4 bis 13) nicht fest zugeordnet sind, und
- eine mit dem Schwaden-Leitungssystem (59 bis 62, 72a, 72d, 72e, 74, 75) zusammenarbeitenden Schwaden-Steuereinrichtung (58) zur Vorgabe der Beschwadungs-Zuordnung der Schwadenerzeugungsmodule (41 bis 46) zu den Herden (4 bis 13) in Abhängigkeit einer Beschwadungstrategie.

2. Backofen nach Anspruch 1, **gekennzeichnet durch** einen Schwaden-Sammelraum (60) im Schwaden-Leitungssystem (59 bis 62, 72a, 72d, 72e, 74, 75) zwischen den Schwadenerzeugungsmodulen (41 bis 46) und den Backräumen (14).

3. Backofen nach Anspruch 1, **gekennzeichnet durch** eine Mehrzahl von im Schwaden-Leitungssystem (59 bis 62, 72a, 72d, 72e, 74, 75) angeordneten und mit der Schwaden-Steuereinrichtung (58) zusammenarbeitenden Beschwadungsventilen (65, 73), wobei jedem Backraum (14) mindestens jeweils ein mit der Schwaden-Steuereinrichtung (58) zusammenarbeitendes Beschwadungsventil (65, 73) zugeordnet ist.

4. Backofen nach Anspruch 3, **dadurch gekennzeichnet, dass** die Beschwadungsventile (65) zwischen den Schwadenerzeugungsmodulen (41 bis 46) und den Backräumen (14) angeordnet sind.

5. Backofen nach Anspruch 3, **dadurch gekennzeichnet, dass** die Beschwadungsventile (73) zwischen den Backräumen (14) und mindestens einer die Schwaden abführenden Entschwadungsleitung (74) angeordnet sind.

6. Backofen nach Anspruch 3, **dadurch gekennzeichnet, dass** die Beschwadungsventile (65, 73) einen von einem Hubzylinder (78) betätigbaren Schieber (66) aufweisen, welcher einen Ventilkörper (64) trägt.

7. Backofen nach Anspruch 1, **dadurch gekennzeichnet, dass** jedem Schwadenerzeugungsmodul (41 bis 46) ein mit der Schwaden-Steuereinrichtung (58) zusammenarbeitender Temperatursensor (53b) zugeordnet ist.

8. Backofen nach Anspruch 1, **dadurch gekennzeichnet, dass** jedes Schwadenerzeugungsmodul (41 bis 46) eine Mehrzahl von insbesondere in Gruppen (50, 52) angeordneten Wärmespeicher-Elementen (49) aufweist.

9. Backofen nach Anspruch 1, **dadurch gekennzeichnet, dass** die Schwadenerzeugungsmodule (41 bis 46) von der Heizeinrichtung (16) beheizt sind.

10. Backofen nach Anspruch 1, **dadurch gekennzeichnet, dass** die Schwaden-Steuereinrichtung (58) mit den den Schwadenerzeugungsmodulen (41 bis 46) zugeordneten Wasser-Zuführventilen (56) zwischen der Wasserquelle (55) und den Schwadenerzeugungsmodulen (41 bis 46) in Signalverbindung steht.

11. Verfahren zum Beschwaden mindestens eines ausgewählten Backraums (14) eines Backofens (1) mit den Merkmalen nach Anspruch 3 und 7 mit folgenden Verfahrensschritten:
- Messen der Temperatur der einzelnen Schwadenerzeugungsmodule (41 bis 46) mit dem Temperatursensor (53b),
- Identifizieren des heißesten Schwadenerzeugungsmoduls,
- Ansteuern der Wasser-Zuführventile (56) und der Beschwadungsventile (65, 73) derart, dass über das Schwaden-Leitungssystem (59 bis 62, 72a, 72d, 72e, 74, 75) eine Verbindung zwischen dem heißesten Schwadenerzeugungsmodul und dem mindestens einen ausgewählten Backraum (14) zur Zufuhr von Schwaden geschaffen ist.

12. Verfahren zum Beschwaden mindestens eines ausgewählten Backraums (14) eines Backofens (1) mit den Merkmalen nach Anspruch 3 und 7 mit folgenden Verfahrensschritten:
- Vorgeben einer Anzahl von Schwadenerzeugungsmodulen (41 bis 46), die zu einer Modulgruppe (47, 48) gehören sollen,
- Messen der Temperatur der einzelnen Schwadenerzeugungsmodule (41 bis 46) mit dem Temperatursensor (53b),
- Identifizieren der Modulgruppe, welche die heißesten Schwadenerzeugungsmodule enthält,
- Ansteuern der Wasser-Zuführventile (56) und der Beschwadungsventile (65, 73) derart, dass über das Schwaden-Leitungssystem (59 bis 62, 72a, 72d, 72e, 74, 75) eine Verbindung zwischen der identifizierten Modulgruppe und dem mindestens einen ausgewählten Backraum (14) zur Zufuhr von Schwaden geschaffen ist.

13. Verfahren nach Anspruch 12, **dadurch gekennzeichnet, dass** die Modulgruppeneinteilung fest vorgegeben ist.

14. Verfahren nach Anspruch 12, **dadurch gekennzeichnet, dass** die Modulgruppeneinteilung variabel ist.

15. Verfahren nach Anspruch 12, **dadurch gekennzeichnet, dass** die heißeste Modulgruppe über eine Berechnung der Durchschnittstemperatur der gemessenen Temperaturen der einzelnen Schwadenerzeugungsmodule (41 bis 46) identifiziert wird.

16. Verfahren nach Anspruch 12, **dadurch gekennzeichnet, dass** die heißeste Modulgruppe über eine Addition der gemessenen Temperaturen der einzelnen Schwadenerzeugungsmodule (41 bis 46) identifiziert wird.

17. Verfahren nach Anspruch 11 und/oder 12, **dadurch gekennzeichnet, dass**
- abhängig von den gemessenen Temperaturdaten und einer vorgegebenen Wärmemenge, die beim Beschwaden dem mindestens einen ausgewählten Backraum (14) zuzuführen ist, neben dem jeweils heißesten Schwadenerzeugungsmodul und/oder der heißesten Modulgruppe zusätzlich
-- das nächstheiße Schwadenerzeugungsmodul und/oder die nächstheiße Modulgruppe und/oder
-- die nächstheißen Schwadenerzeugungsmodule und/oder die nächstheißen Modulgruppen
identifiziert werden und dass
- die Beschwadungsventile (65, 73) derart angesteuert werden, dass über das Schwaden-Leitungssystem (59 bis 62, 72a, 72d, 72e, 74, 75) eine Verbindung zwischen den identifizierten Schwadenerzeugungsmodulen und/oder Modulgruppen und dem mindestens einen ausgewählten Backraum (14) zur Zufuhr von Schwaden geschaffen ist.

## Claims

1. Baking oven (1) comprising
- a housing (1a)
- a plurality of stoves (4 to 13) arranged on top of one another in a stack each comprising at least one baking chamber (14),
- a heating device (16) for heating the baking chambers (14),
- a steaming device (16, 41 to 46, 59 to 68) leading to each stove (4 to 13) for supplying steam and/or fresh air to the baking chambers (14).
- comprising at least two steam producing modules (41 to 46) connected to a water source (55) by means of a controllable supply valve (56) for generating steam,
- a de-steaming device (72 to 75) leading away from each stove (4 to 13) for removing steam and/or waste air from the baking chambers (14),
- a steam piping system (59 to 62, 72a, 72d, 72e, 74, 75) which connects the steam generating modules (41 to 46) to the baking chambers (14) and the baking chambers (14) to the environment of the housing (1 a),
**characterised by**
- a design of the steam piping system (59 to 62, 72a, 72d, 72e, 74, 75) such that
-- each baking chamber (14) can be connected to each steam generating module (41 to 46),
-- the steam generating modules (41 to 46) are not permanently assigned to the stoves (4 to 13) and
- a steam control device (58) cooperating with the steam piping system (59 to 62, 72a, 72d, 72e, 74, 75) for determining the steam allocation of the steam generating modules (41 to 46) to the ovens (4 to 13) as a function of a steaming strategy.

2. Baking oven according to claim 1, **characterised by** a steam collecting chamber (60) in the steam piping system (59 to 62, 72a, 72d, 72e, 74, 75) between the steam generating modules (41 to 46) and the baking chambers (14).

3. Baking oven according to claim 1, **characterised by** a plurality of steam injection valves (65, 73) arranged in the steam piping system (59 to 62, 72a, 72d, 72e, 74, 75) and cooperating with the steam control device (58), wherein to each baking chamber (14) at least one steam injection valve (65, 73) is assigned which cooperates with the steam control device (58).

4. Baking oven according to claim 3, **characterised in that** the steam injection valves (65) are arranged between the steam generating modules (41 to 46) and the baking chambers (14).

5. Baking oven according to claim 3, **characterised in that** the steam injection valves (73) are arranged between the baking chambers (14) and at least one de-steaming pipe (74) removing the steam.

6. Baking oven according to claim 3, **characterised in that** the steam injection valves (65, 73) comprise a slider (66) which can be activated by a lifting cylinder (78), which supports a valve body (64).

7. Baking oven according to claim 1, **characterised in that** a temperature sensor (53b) cooperating with the steam control device (58) is assigned to each steam generating module (41 to 46).

8. Baking oven according to claim 1, **characterised in that** each steam generating module (41 to 46) comprises a plurality of heat storage elements (49) arranged in particular in groups (50, 52).

9. Baking oven according to claim 1, **characterised in that** the steam generating modules (41 to 46) are heated by the heating device (16).

10. Baking oven according to claim 1, **characterised in that** the steam control device (58) is in signal connection with the water supply valves (56) assigned to the steam generating modules (41 to 46) between the water source (55) and the steam generating modules (41 to 46).

11. Method for steaming at least one selected baking chamber (14) of a baking oven (1) with the features according to claim 3 and 7 with the following method steps:
- measuring the temperature of the individual steam generating modules (41 to 46) with the temperature sensor (53b),
- identifying the hottest steam generating module,
- controlling the water feed valves (56) and the steam injection valves (65, 73) such that by means of the steam control system (59 to 62, 72a, 72d, 72e, 74, 75) a connection is created between the hottest steam generating module and the at least one selected baking chamber (14) to supply steam.

12. Method for steaming at least one selected baking chamber (14) of a baking oven (1) with the features according to claims 3 to 7 with the following method steps:
- providing a number of steam generating modules (41 to 46) which are to belong to a module group (47, 48),
- measuring the temperature of the individual steam generating modules (41 to 46) with the temperature sensor (53b),
- identifying the module group, which contains the hottest steam generating modules,
- controlling the water supply valves (56) and the steam injection valves (65, 73) such that by means of the steam piping system (59 to 62, 72a, 72d, 72e, 74, 75) a connection is created between the identified module group and the at least one selected baking chamber (14) for supplying steam.

13. Method according to claim 12, **characterised in that** the module group allocation is predetermined.

14. Method according to claim 12, **characterised in that** the module group allocation is variable.

15. Method according to claim 12, **characterised in that** the hottest module group is identified by calculating the average temperature of the measured temperatures of the individual steam generating modules (41 to 46).

16. Method according to claim 12, **characterised in that** the hottest module group is identified by the addition of the measured temperatures of the individual steam generating modules (41 to 46).

17. Method according to claim 11 and/or 12 **characterised in that**
- as a function of the measured temperature data and a predetermined amount of heat, which is to be supplied when steaming the at least one selected baking chamber (14), in addition to the hottest steam generating module and/or the hottest module group also
-- the next hottest steam generating module and/or the next hottest module group and/or
-- the next hottest steam generating modules and/or the next hottest module groups
are identified and **in that** the
- steam injection valves (65, 73) are controlled such that by means of the steam piping system (59 to 62, 72a, 72d, 72e, 74, 75) a connection is created between the identified steam generating modules and/or module groups and the at least one selected baking chamber (14) for supplying steam.

## Revendications

1. Four de cuisson(1)
- avec une enceinte (la),
- avec une multitude de fours agencés en étages (4 à 13) comportant chacun au moins une chambre de cuisson (14),
- avec un dispositif de chauffage (16) pour le chauffage des chambres de cuisson (14)
- avec, menant à chaque four, un dispositif de traitement à la vapeur (16, 41 à 46, 59 à 68) pour l'introduction de vapeur et/ou d'air frais dans les chambres de cuisson (14),
-- avec au moins deux modules de génération de vapeur (41 à 46) reliés chacun à une vanne d'introduction pouvant être commandée (56) pour la génération de vapeur,
- avec, partant de chaque four (4 à 13), des dispositifs d'élimination de la vapeur (72 à 75) pour l'évacuation de la vapeur et/ou de l'air rejeté à partir des chambres de cuisson (14),
- avec un système de canalisations de vapeur (59 à 62, 72a, 72d, 72e, 74, 75) qui relient les modules de génération de vapeur (41 à 46) avec les chambres de cuisson (14) et les chambres de cuisson (14), avec l'environnement de l'enceinte (la),
**caractérisé par**
- une conception du système de canalisations de vapeur (59 à 62, 72a, 72d, 72e, 74, 75) où
-- chaque chambre de cuisson (14) peut être connectée à n'importe quel module de génération de vapeur (41 à 46),
-- les modules de génération de vapeur (41 à 46) ne sont pas affectés de manière fixe aux fours (4 à 13), et
- un dispositif de commande de vapeur (58) oeuvrant conjointement avec le système de canalisations de vapeur (59 à 62, 72a, 72d, 72e, 74, 75) pour donner les instructions pour la distribution du traitement à la vapeur des modules de génération de vapeur (41 à 46) vers les fours (4 à 13) en fonction d'une stratégie de traitement à la vapeur.

2. Four de cuisson selon la revendication 1 **caractérisé par** une chambre de collecte de vapeur (60) dans le système de canalisations de la vapeur (59 à 62, 72a, 72d, 72e, 74, 75) entre les modules de génération de vapeur (41 à 46) et les chambres de cuisson (14).

3. Four de cuisson selon la revendication 1 **caractérisé par** une multitude de vannes d'injection de vapeur (65, 73) agissant conjointement avec le dispositif de commande de vapeur (58), agencées dans le système de canalisations de vapeur (59 à 62, 72a, 72d, 72e, 74, 75), chaque chambre de cuisson (14) étant respectivement équipée d'au moins une vanne d'injection de vapeur (65, 73) travaillant avec le dispositif de commande de vapeur (58).

4. Four de cuisson selon la revendication 3 **caractérisé en ce que** les vannes d'injection de vapeur (65) sont agencées entre les modules de génération de vapeur (41 à 46) et les chambres de cuisson (14).

5. Four de cuisson selon la revendication 3 **caractérisé en ce que** les vannes d'injection de vapeur (73) sont agencées entre les chambres de cuisson (14) et au moins l'une des canalisations de sortie de vapeur (74).

6. Four de cuisson selon la revendication 3 **caractérisé en ce que** les vannes d'injection de vapeur (65, 73) présentent un clapet (66) pouvant être manoeuvré par un vérin de levage (78), qui porte un corps de vanne (64).

7. Four de cuisson selon la revendication 1 **caractérisé en ce qu'**un capteur de température (53b) travaillant conjointement avec le dispositif de commande de vapeur (58) est agencé à chaque module de génération de vapeur (41 à 46).

8. Four de cuisson selon la revendication 1 **caractérisé en ce que** chaque module de génération de vapeur (41 à 46) présente une multitude d'éléments accumulateurs de chaleur agencés, en particulier, par groupes (50, 52).

9. Four de cuisson selon la revendication 1 **caractérisé en ce que** les modules de génération de vapeur (41 à 46) sont chauffés par le dispositif de chauffage (16).

10. Four de cuisson selon la revendication 1 **caractérisé en ce que** le dispositif de commande de vapeur (58) se situe en liaison de signal avec les vannes d'alimentation en eau (56) agencées aux modules de génération de vapeur (41 à 46) entre la source d'eau (55) et les modules de génération de vapeur (41 à 46).

11. Procédé pour le traitement à la vapeur d'au moins une chambre de cuisson (14) sélectionnée d'un four de cuisson (1) possédant les caractéristiques selon les revendications 3 et 7 avec les étapes de procédé suivantes :
- mesure de la température des modules de génération de vapeurs (41 à 46) individuels avec un capteur de température (53b),
- identification du module de génération de vapeur le plus chaud,
- mise en route des vannes d'alimentation en eau (56) et des vannes d'injection de vapeur (65, 73) de sorte qu'une liaison soit établie par l'intermédiaire du système de canalisations de vapeur (59 à 62, 72a, 72d, 72e, 74, 75) entre le module de génération de vapeur le plus chaud et au moins une chambre de cuisson (14) sélectionnée pour le traitement à la vapeur.

12. Procédé pour le traitement à la vapeur d'au moins une chambre de cuisson (14) sélectionnée d'un four de cuisson (1) possédant les caractéristiques selon les revendications 3 et 7 avec les étapes de procédé suivantes :
- indication d'un nombre de modules de génération de vapeur (41 à 46) qui doivent faire partie d'un groupe de modules (47, 48),
- mesure de la température des modules de génération de vapeur (41 à 46) individuels avec un capteur de température (53b),
- identification du groupe de modules qui contient le module de génération de vapeur le plus chaud,
- mise en route des vannes d'alimentation en eau (56) et des vannes d'injection de vapeur (65, 73) de sorte qu'une liaison s'établisse par l'intermédiaire du système de canalisations de vapeur (59 à 62, 72a, 72d, 72e, 74, 75) entre le groupe de modules identifié et au moins une chambre de cuisson (14) sélectionnée pour l'alimentation en vapeur.

13. Procédé selon la revendication 12 **caractérisé en ce que** la répartition des groupes de modules est bien prédéterminée.

14. Procédé selon la revendication 12 **caractérisé en ce que** la répartition des groupes de modules est variable.

15. Procédé selon la revendication 12 **caractérisé en ce que** le groupe de modules le plus chaud est identifié par un calcul de la température moyenne des températures mesurées sur les modules de génération de vapeur (41 à 46) individuels.

16. Procédé selon la revendication 12 **caractérisé en ce que** le groupe de modules le plus chaud est identifié par une addition des températures mesurées des modules de génération de vapeur (41 à 46) individuels.

17. Procédé selon la revendication 11 et/ou 12 **caractérisé en ce**
- **qu'**en fonction des données de températures mesurées et d'une quantité de chaleur prédéterminée qui est à alimenter dans au moins l'une des chambres de cuisson (14) sélectionnées pour le traitement à la vapeur, en plus, chaque fois, du module de génération de vapeur le plus chaud et/ou du groupe de modules le plus chaud,
-- le module de génération de vapeur le plus chaud suivant et/ou le groupe de modules le plus chaud suivant et/ou
-- les modules de génération de vapeur les plus chauds suivants et/ou les groupes de modules les plus chauds suivants
doivent encore être identifiés et que
- les vannes d'injection de vapeur (65, 73) sont commandées de telle manière qu'une liaison soit établie entre les modules de génération de vapeur et/ou les groupes de modules identifiés et au moins l'une des chambres de cuisson (14) sélectionnée pour l'alimentation en vapeur.
